# EUROPEAN PATENT APPLICATION

(11) **EP 4 318 505 A1**
(43) Date of publication of application: **07.02.2024**
(21) Application number: 22775155.9
(22) Date of filing: 10.03.2022
(51) Int. Cl.: H01F 5/06, H01B 3/00, H01B 13/00, H01F 27/32

(54) **INSULATION FILM-PROVIDED FLAT CONDUCTIVE PLATE AND METHOD FOR MANUFACTURING SAME**

(30) Priority: 24.03.2021 JP 2021049718
(71) Applicant: Mitsubishi Materials Corporation, Tokyo 100-8117 (JP)
(72) Inventor: YAMASAKI, Kazuhiko, Amagasaki-shi, Hyogo 660-0856 (JP); SAKO, Nagisa, Amagasaki-shi, Hyogo 660-0856 (JP)
(74) Representative: Gille Hrabal Partnerschaftsgesellschaft mbB Patentanwälte
(86) International application number: PCT/JP2022/010601
(87) International publication number: WO 2022/202363

(57) **Abstract**

This flat conductive plate provided with an insulating film (1) includes a flat conductive plate (10) which is a punched product, and an insulating film (20) which coats at least a part of the flat conductive plate (10), the insulating film (20) is an electrodeposited film, the insulating film (20) includes a polyamide-imide resin and a fluorine-based resin, an amount of the fluorine-based resin with respect to a total amount of the polyamide-imide resin and the fluorine-based resin is in a range of 72% by mass or more and 95% by mass or less, a relative permittivity at 25°C is in a range of 2.2 or more and 2.8 or less, and an average film thickness is in a range of 5 µm or more and 100 µm or less.

## Description

### TECHNICAL FIELD

The present invention relates to a flat conductive plate provided with an insulating film and a method for manufacturing the same.

The present application claims priority on Japanese Patent Application No. 2021-049718 filed on March 24, 2021, the content of which is incorporated herein by reference.

### BACKGROUND ART

Flat conductive plates obtained by punching are used as, for example, motor components such as coils or inductors. The flat conductive plate used in these motor components is usually coated with an insulating film.

An electrodeposited film is used as the insulating film (Patent Document 1). The electrodeposited film is a film deposited by an electrodeposition method. The electrodeposition method is a method that includes: immersing a flat conductive plate and an electrode in an electrodeposition dispersion, in which insulating resin particles having charges are dispersed; and applying a direct-current voltage between the flat conductive plate and the electrode to attach the insulating resin particles to a surface of the flat conductive plate, and thereby, an insulating film is formed. As a material of the electrodeposited film for the flat conductive plate, a polyimide-based resin having excellent heat resistance is widely used. Patent Document 1 discloses a flat conductive plate provided with an insulating film in which a block copolymer polyimide electrodeposited film containing a siloxane bond in a main chain of polyimide and having an anionic group in molecules is used as the insulating film.

In order to reduce a size of a coil or an inductor and increase an output thereof, it is being studied to narrow an interval between the flat conductive plates provided with insulating films to increase the number of flat conductive plates per unit length. In order to narrow the interval between the flat conductive plates provided with insulating films, it is necessary to reduce a relative permittivity of the insulating film and increase a partial discharge inception voltage between the flat conductive plates. In addition, by reducing the relative permittivity of the insulating film and increasing hardness to withstand an assembling step, it is possible to make a film thickness of the insulating film thinner while maintaining a predetermined partial discharge inception voltage, and the reduction of a coil volume can be expected. However, only an insulating film having a relative permittivity exceeding 3 was obtained with regard to a polyimide-based resin used in a flat conductive plate provided with an insulating film of the related art.

### PRIOR ART DOCUMENTS

### Patent Documents

Patent Document 1: Japanese Unexamined Patent Application, First Publication No. 2005-228984

### DISCLOSURE OF INVENTION

### Problems to be Solved by the Invention

The present invention has been made in view of the circumstances described above, and an object of the present invention is to provide a flat conductive plate provided with an insulating film which is coated with the insulating film having a low relative permittivity and high hardness, and a method for manufacturing the same.

### Solutions for Solving the Problems

As a result of studies to solve the above problems, the inventors of the present invention have found that when an electrodeposited film is deposited by an electrodeposition method using an electrodeposition dispersion including polyamide-imide resin particles and fluorine-based resin particles on a surface of a flat conductive plate, which is a punched product, the electrodeposited film has a low relative permittivity. In particular, the inventors have found that, an electrodeposited film including the fluorine-based resin in an amount of 72% by mass or more and 95% by mass or less shows high hardness, even in a case where the relative permittivity is 2.8 or less which is low and an average film thickness is in a range of 5 µm or more and 100 µm or less.

Therefore, a flat conductive plate provided with an insulating film according to an aspect of the present invention includes a flat conductive plate which is a punched product, and an insulating film which coats at least a part of the flat conductive plate, the insulating film is an electrodeposited film, the insulating film includes a polyamide-imide resin and a fluorine-based resin, an amount of the fluorine-based resin with respect to a total amount of the polyamide-imide resin and the fluorine-based resin is in a range of 72% by mass or more and 95% by mass or less, a relative permittivity at 25°C is in a range of 2.2 or more and 2.8 or less, and an average film thickness is in a range of 5 µm or more and 100 µm or less.

According to the flat conductive plate provided with an insulating film according to an aspect of the present invention, the insulating film is the electrodeposited film and the amount of the fluorine-based resin is in a range of 72% by mass or more and 95% by mass or less. Therefore, high hardness is obtained even in a case where the relative permittivity at 25°C is in a range of 2.2 or more and 2.8 or less which is low and the average film thickness is in a range of 5 µm or more and 100 µm or less.

In the flat conductive plate provided with an insulating film according to an aspect of the present invention, hardness of the insulating film may be in a range of 2B or more and 4H or less in terms of pencil hardness.

In this case, since the pencil hardness of the insulating film is in a range of 2B or more and 4H or less, the flat conductive plate provided with an insulating film can be used as a motor component such as a coil or an inductor, even in a case where the average film thickness is 100 µm or less which is thin.

In addition, in the flat conductive plate provided with an insulating film according to an aspect of the present invention, an element of a main component of the flat conductive plate may be copper or aluminum.

In this case, since the main component of the flat conductive plate is copper or aluminum, adhesiveness between the flat conductive plate and the insulating film is increased. Therefore, the hardness of the insulating film is further increased.

In addition, in the flat conductive plate provided with an insulating film according to an aspect of the present invention, the flat conductive plate may be an annular body having an opening part in the center in a plan view, and having one release part connecting the opening part and an outer peripheral part.

In this case, since the flat conductive plate is the annular body having the opening part in the center in a plan view, and having one release part connecting the opening part and the outer peripheral part, the flat conductive plate provided with an insulating film can be used as a motor component such as a coil or an inductor.

A method for manufacturing a flat conductive plate provided with an insulating film according to an aspect of the present invention includes: an electrodeposition step of electrodepositing an electrodeposition dispersion on a surface of a flat conductor which is a punched product to obtain a flat conductor provided with an electrodeposited layer, wherein the electrodeposition dispersion contains polyamide-imide resin particles and fluorine-based resin particles, and an amount of the fluorine-based resin particles with respect to a total amount of the polyamide-imide resin particles and the fluorine-based resin particles is in a range of 72% by mass or more and 95% by mass or less; and a baking step of heating the flat conductor provided with an electrodeposited layer at a temperature of 260°C or higher and 350°C or lower to bake the electrodeposited layer on the flat conductor.

According to the method for manufacturing a flat conductive plate provided with an insulating film according to an aspect of the present invention, the insulating film is deposited by the electrodeposition method by using the electrodeposition dispersion, in which the amount of the fluorine-based resin particles with respect to the total amount of the polyamide-imide resin particles and the fluorine-based resin particles is in a range of 72% by mass or more and 95% by mass or less. Therefore, it is possible to manufacture a flat conductive plate provided with an insulating film which is coated with the insulating film having a low relative permittivity and high hardness.

### Effects of Invention

According to an aspect of the present invention, it is possible to provide a flat conductive plate provided with an insulating film which is coated with the insulating film having a low relative permittivity and high hardness, and a method for manufacturing the same.

### BRIEF DESCRIPTION OF DRAWINGS

FIG. 1 is a plan view of a flat conductive plate provided with an insulating film according to an embodiment of the present invention.
FIG. 2 is a cross-sectional view taken along line II-II of FIG. 1.

### EMBODIMENTS FOR CARRYING OUT THE INVENTION

Hereinafter, a flat conductive plate provided with an insulating film and a method for manufacturing the same according to an embodiment of the present invention will be described with reference to the accompanying drawings.

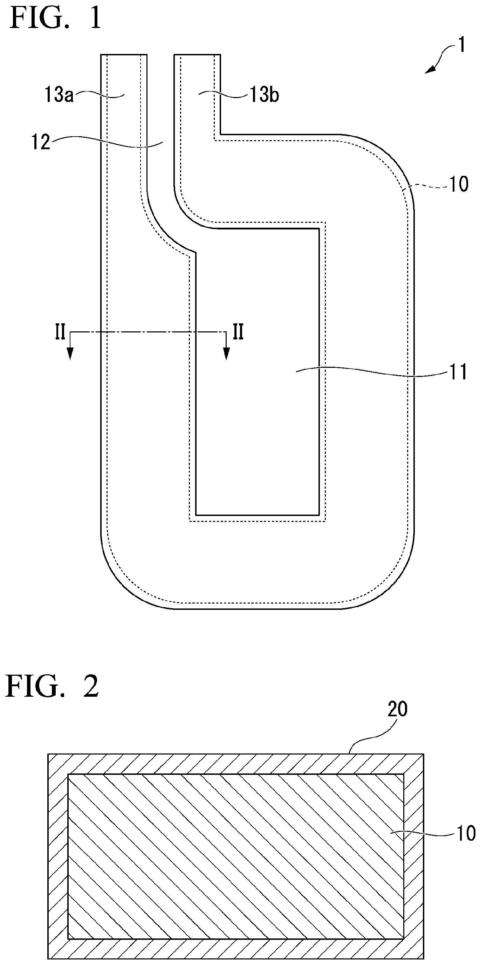

FIG. 1 is a plan view of a flat conductive plate provided with an insulating film according to an embodiment of the present invention. FIG. 2 is a cross-sectional view taken along line II-II of FIG. 1.

As shown in FIG. 1, a flat conductive plate provided with an insulating film 1 includes a flat conductive plate 10 and an insulating film 20 that coats the flat conductive plate 10.

The flat conductive plate 10 is a punched product formed by punching a metal plate. The flat conductive plate 10 is an annular body having an opening part 11 in the center in a plan view and a release part 12 connecting the opening part 11 to an outer peripheral part. The flat conductive plate 10 includes extended parts 13a and 13b extending in such a manner to sandwich the release part 12. The extended parts 13a and 13b can be used as terminals in a case of being incorporated into a coil or an inductor. Therefore, distal ends of the extended parts 13a and 13b may not be coated with the insulating film 20.

The flat conductive plate 10 may be copper, a copper alloy, aluminum, or an aluminum alloy. The copper alloy is, for example, an alloy containing 50% by mass or more of copper. The aluminum alloy is, for example, an alloy containing 50% by mass or more of aluminum. Copper and aluminum have high adhesiveness to a polyamide-imide resin contained in the insulating film 20. Therefore, in a case where an element of a main component of the flat conductive plate 10 is copper or aluminum, the adhesiveness between the flat conductive plate 10 and the insulating film 20 is increased.

The insulating film 20 is an electrodeposited film. The electrodeposited film is a film deposited by an electrodeposition method. The electrodeposition method is a method that includes: immersing a flat conductive plate and an electrode in an electrodeposition dispersion, in which insulating resin particles having charges are dispersed; and applying a direct-current voltage between the flat conductive plate and the electrode to attach the insulating resin particles to a surface of the flat conductive plate, and thereby, an insulating film is formed.

The insulating film 20 contains a polyamide-imide resin and a fluorine-based resin. The polyamide-imide resin is a resin which has both properties of a polyamide resin and a polyimide resin, which is excellent in heat resistance, and which has high hardness. The fluorine-based resin is a resin having high electrical insulation and a low relative permittivity. Examples of the fluorine-based resin include polytetrafluoroethylene (PTFE), perfluoroalkoxy fluorine resin (PFA), and ethylene tetrafluoride/propylene hexafluoride copolymer (FEP). An amount of the fluorine-based resin in the insulating film 20 which is the amount of the fluorine-based resin with respect to a total amount of the polyamide-imide resin and the fluorine-based resin is in a range of 72% by mass or more and 95% by mass or less. In a case where the amount of the fluorine-based resin in the insulating film 20 is too low, there is a risk that the relative permittivity of the insulating film 20 increases. On the other hand, in a case where the amount of the fluorine-based resin in the insulating film 20 is too high, the adhesiveness to the flat conductive plate 10 is reduced; and thereby, it becomes difficult to maintain a shape of the insulating film 20. From a viewpoint of the relative permittivity of the insulating film 20, the amount of the fluorine-based resin in the insulating film 20 is preferably 75% by mass or more, and particularly preferably 80% by mass or more. Meanwhile, from a viewpoint of stability of the shape of the insulating film, the amount of the fluorine-based resin in the insulating film 20 is preferably 90% by mass or less.

The insulating film 20 has the relative permittivity in a range of 2.2 or more and 2.8 or less. In a case where the relative permittivity of the insulating film 20 is too high, there is a risk that an insulating property of the insulating film 20 is reduced and a partial discharge easily occurs in a case of being incorporated into a coil or an inductor. The relative permittivity of the insulating film 20 is preferably 2.7 or less and particularly preferably 2.6 or less. Meanwhile, in order to set the relative permittivity of the insulating film 20 to be less than 2.2, it is necessary that the fluorine-based resin is contained in an amount exceeding 95% by mass, and stability of the shape of the insulating film 20 may be reduced.

The insulating film 20 has an average film thickness in a range of 5 µm or more and 100 µm or less. In a case where the average film thickness of the insulating film 20 is in this range, the relative permittivity can be reduced while maintaining the hardness of the insulating film 20 at a high level. From a viewpoint of increasing the number of sheets per unit length in a case of being incorporated into a coil or an inductor, the average film thickness of the insulating film 20 is preferably 90 µm or less and particularly preferably 70 µm or less. On the other hand, from a viewpoint of the hardness of the insulating film 20, the average film thickness of the insulating film 20 is preferably 10 µm or more and particularly preferably 30 µm or more. In addition, the hardness of the insulating film 20 is preferably in a range of 2B or more and 4H or less in terms of pencil hardness.

Next, a method for manufacturing the flat conductive plate provided with an insulating film 1 of the present embodiment will be described.

The method for manufacturing the flat conductive plate provided with an insulating film 1 of the present embodiment includes an electrodeposition step and a baking step.

The electrodeposition step is a step of electrodepositing an electrodeposition dispersion containing polyamide-imide resin particles and fluorine-based resin particles on a surface of a flat conductor which is a punched product, to obtain a flat conductor provided with an electrodeposited layer. The amount of polyamide-imide resin particles in the electrodeposition dispersion is, for example, in a range of 0.5% by mass or more and 5% by mass or less and preferably in a range of 1.0% by mass or more and 2.5% by mass or less. The amount of the fluorine-based resin particles in the electrodeposition dispersion which is the amount of the fluorine-based resin particles with respect to a total amount of the polyamide-imide resin particles and the fluorine-based resin particles is in a range of 72% by mass or more and 95% by mass or less. The amount of the fluorine-based resin with respect to the total amount of the polyamide-imide resin particles and the fluorine-based resin particles is preferably 75% by mass or more and particularly preferably 80% by mass or more. In addition, the amount of the fluorine-based resin with respect to the total amount of the polyamide-imide resin particles and the fluorine-based resin particles is preferably 90% by mass or less.

A median diameter of the polyamide-imide resin particles is preferably in a range of 150 nm or more and 300 nm or less. In addition, a median diameter of the fluorine-based resin particles is preferably in a range of 150 nm or more and 300 nm or less. In a case where the median diameter of the fluorine-based resin particles exceeds 300 nm, the hardness of the insulating film tends to decrease. The median diameter of the polyamide-imide resin particles and the median diameter of the fluorine-based resin particles are volume-based average particle sizes measured using a dynamic light scattering particle size distribution measurement device (LB-550 manufactured by Horiba, Ltd.).

The electrodeposition dispersion can be prepared by mixing a dispersion of the polyamide-imide resin particles and a dispersion of the fluorine-based resin particles.

For example, the dispersion of the polyamide-imide resin particles can be obtained by a method which includes: mixing a polyamide-imide resin and an organic solvent capable of dissolving the polyamide-imide resin to prepare a polyamide-imide resin varnish; and adding a hydrophobic base and water which is a poor solvent with respect to the polyamide-imide resin to the polyamide-imide resin varnish. As the organic solvent, for example, polar solvents such as N-methyl-2-pyrrolidone (NMP), N,N-dimethylformamide (DMF), N,N-dimethylacetamide (DMAc), 1,3-dimethylimidazolidinone, dimethylsulfoxide (DMSO), and γ-butyrolactone (γ-BL) can be used. One of these polar solvents may be used alone or a combination of two or more thereof may be used. In addition, the hydrophobic base preferably has an affinity for the organic solvent. Examples of the hydrophobic base include tri-n-propylamine, tri-n-butylamine, dibenzylamine, decylamine, octylamine, hexylamine, diamylamine, dihexylamine, dioctylamine, triamylamine, trihexylamine, trioctylamine, tribenzylamine, aniline, and the like. One of these hydrophobic bases may be used alone or a combination of two or more thereof may be used. An amount of the organic solvent with respect to a total amount of the organic solvent and water is, for example, in a range of 70% by mass or more and 87% by mass or less. The amount of the hydrophobic base is, for example, in a range of 0.02% by mass or more and 0.1% by mass or less with respect to the electrodeposition dispersion. A commercially available dispersion of the fluorine-based resin particles can be used as the dispersion of the fluorine-based resin particles. The polyamide resin is an anionic resin with a negative charge, and from a viewpoint of dispersibility, a resin having an anionic charge is also preferably used as the fluorine-based resin.

As a method for electrodepositing an electrodeposition dispersion on a surface of a flat conductor to obtain the electrodeposited film, for example, a method of applying a direct-current voltage between the flat conductor and the electrode in a state where the flat conductor and the electrode are immersed in the electrodeposition dispersion, can be used. The applied direct-current voltage is preferably in a range of 1 V or more and 600 V or less. Thereby, the polyamide-imide resin particles and the fluorine-based resin particles in the electrodeposition dispersion are electrodeposited on the surface of the flat conductor to form the electrodeposited film.

In the baking step, the flat conductor provided with an electrodeposited layer is heated to bake the electrodeposited layer on the flat conductor. A baking temperature is in a range of 260°C or higher and 350°C or lower. A heating atmosphere is not particularly limited, and may be an air atmosphere or an inert atmosphere.

As described above, the flat conductive plate provided with an insulating film 1 of the present embodiment can be manufactured. The obtained flat conductive plate provided with an insulating film 1 can be used as a motor component such as a coil or an inductor.

According to the flat conductive plate provided with an insulating film 1 of the present embodiment configured as described above, the insulating film 20 is the electrodeposited film in which the amount of the fluorine-based resin is in a range of 72% by mass or more and 95% by mass or less. Therefore, high hardness is obtained even in a case where the relative permittivity at 25°C is in a range of 2.2 or more and 2.8 or less which is low and the average film thickness is in a range of 5 µm or more and 100 µm or less.

In addition, in the flat conductive plate provided with an insulating film 1 of the present embodiment, in a case where an element of a main component of the flat conductive plate 10 is copper or aluminum, since copper and aluminum have high adhesiveness to the polyamide-imide resin contained in the insulating film 20, the adhesiveness between the flat conductive plate 10 and the insulating film 20 is increased. Therefore, the hardness of the insulating film 20 is further increased.

In addition, in the flat conductive plate provided with an insulating film 1 of the present embodiment, in a case where the flat conductive plate 10 is the annular body having the opening part 11 in the center in a plan view, and having one release part 12 connecting the opening part 11 and the outer peripheral part, the flat conductive plate provided with an insulating film 1 can be advantageously used as a motor component such as a coil or an inductor.

In addition, according to the method for manufacturing a flat conductive plate provided with an insulating film according to the present embodiment, the insulating film is formed by the electrodeposition method by using the electrodeposition dispersion in which the amount of the fluorine-based resin particles with respect to the total amount of the polyamide-imide resin particles and the fluorine-based resin particles is in a range of 72% by mass or more and 95% by mass or less. Therefore, it is possible to manufacture the flat conductive plate provided with an insulating film 1 which is coated with the insulating film having a low relative permittivity and high hardness.

Although the embodiment of the present invention has been described above, the present invention is not limited thereto and can be appropriately modified within a range not departing from the technical features of the invention.

### EXAMPLES

### [Invention Example 1]

### (1) Preparation of Dispersion of Polyamide-imide Resin Particles

747 g of N-methyl-2-pyrrolidone (a polar solvent), 298 g (1.19 mol) of diphenylmethane-4,4'-diisocyanate (MD1, an isocyanate component), and 227 g (1.18 mol) of trimellitic anhydride (TMA, an acid component) were added to a 2L four-necked flask including a stirrer, a cooling pipe, a nitrogen inlet pipe, and a thermometer, and a mixture was heated to 130°C. Then, a resultant material was reacted at a temperature of 130°C for approximately 4 hours to obtain a polymer (a polyamide-imide resin) having a number average molecular weight of 17000. Then, the synthesized polyamide-imide resin was dissolved in N-methyl-2-pyrrolidone (a polar solvent) so that a concentration of the polyamide-imide resin (a nonvolatile matter) was 20% by mass to obtain a polyamide-imide resin varnish (polyamide-imide resin:N-methyl-2-pyrrolidone = 20% by mass:80% by mass).

62.5 g of the obtained polyamide-imide resin varnish was further diluted with 140 g of N-methyl-2-pyrrolidone (a polar solvent), and 0.5 g of tri-n-propylamine (a basic compound, base) was added. Then, 47 g of water was added at room temperature (25°C) while stirring this liquid at a high rotation speed of 10000 rpm. As a result, 250 g of a dispersion of polyamide-imide resin particles having a median diameter of 160 nm (polyamide-imide resin particles:N-methyl-2-pyrrolidone:water:tri-n-propylamine = 5% by mass:76% by mass:18.8% by mass:0.2% by mass) was obtained.

### (2) Preparation of Dispersion of Fluorine-Based Resin Particles

Polyflon PTFE-D (manufactured by Daikin Industries, Ltd.) having a ratio of fluorine-based resin particles (PTFE particles): water of 60% by mass:40% by mass was diluted with water, to obtain a dispersion of fluorine-based resin particles having a median diameter of 200 nm (fluorine-based resin particles:water = 30% by mass:70% by mass).

### (3) Preparation of Electrodeposition Dispersion

60 g of a dispersion of polyamide-imide resin particles and 10 g of a dispersion of fluorine-based resin particles were mixed to obtain an electrodeposition dispersion (polyamide-imide resin particles: fluorine-based resin particles:N-methyl-2-pyrrolidone:water:tri-n-propylamine = 4.3% by mass:4.3% by mass:65% by mass:26.2% by mass:0.2% by mass). The polyamide-imide resin particles and the fluorine-based resin particles were the solids, and N-methyl-2-pyrrolidone (a polar solvent), water, and tri-n-propylamine (base) were dispersion media.

### (4) Flat Conductive Plate Provided with Insulating Film

A flat conductive plate provided with an insulating film was manufactured by using the electrodeposition dispersion prepared above.

As the flat conductive plate, an annular-shaped copper plate having an opening part in the center and a release part connecting an outer peripheral part and the opening part, which was manufactured by punching a copper plate, was used.

First, the electrodeposition dispersion prepared in the section (3) above was stored in an electrodeposition tank, and a temperature of the electrodeposition dispersion in this electrodeposition tank was set to 20°C. Next, in a state where the annular copper plate (the flat conductive plate) was set as an anode, a cylindrical copper plate put into the electrodeposition dispersion in the electrodeposition tank was set as a cathode, and a direct-current voltage of 100 V was applied between the annular copper plate and the cylindrical copper plate, the annular copper plate and the cylindrical copper plate were held in the electrodeposition dispersion in the electrodeposition tank for 10 seconds. Thereby, an electrodeposited film was formed on a surface of the annular copper plate. Next, the annular copper plate, on which the electrodeposited film was formed, was placed in a muffle furnace at 300°C for 3 minutes for a dry treatment, to obtain a copper wire, and an insulating film having a thickness of 5 µm was formed on a surface of the copper wire. This copper wire provided with the insulating film was set as Example 1.

### [Invention Examples 2 to 39 and Comparative Examples 1 to 7]

An electrodeposition dispersion was prepared in the same manner as in Invention Example 1, except that each of the material of the flat conductive plate, the type and the median diameter of the fluorine-based resin particles, and the ratio (mass ratio) of the polyamide-imide resin particles and the fluorine-based resin particles was changed as shown in Tables 1 to 3 below. Then, a flat conductive plate provided with an insulating film was manufactured in the same manner as in Invention Example 1, except that the obtained electrodeposition dispersion was used.

### [Evaluation]

Inventive Examples 1 to 39 and Comparative Examples 1 to 7 were evaluated for the following items. The results are shown in Tables 1 to 3 below. In addition, in Comparative Example 7, an insulating film could not be formed.

### [Average Film Thickness]

A thickness T₁ of the flat conductive plate provided with an insulating film was measured using a micrometer (manufactured by Mitutoyo Corporation). A thickness T₀ of a rectangular conductive plate measured in advance was subtracted from the obtained thickness T₁ of the flat conductive plate, and a resulting value was divided by 2. The obtained value [(T₁ - T₀)/2] was defined as an average film thickness.

### [Relative Permittivity]

A capacitance of the insulating film was measured using an LCR meter (manufactured by HIOKI E.E. Corporation). A dielectric constant was calculated from the obtained capacitance and the average film thickness of the insulating film measured above. The relative permittivity was obtained by dividing the calculated dielectric constant by a vacuum dielectric constant ε₀ (8.85 × 10⁻¹² F/m).

### [Hardness]

The measurement was performed based on JIS-K5600-5-4:1996 (Testing methods for paints-Part 5: mechanical properties of film-Section 4: scratch hardness (Pencil Method)). Using a commercially available pencil hardness tester, a surface of a film was moved 7 mm or more at a speed of 0.5 to 1 mm/sec by applying a load of 750 g to a pencil fixed at an angle of 45°, and presence or absence of scratches was confirmed. The same operation was performed at different places while changing the hardness of the pencil, and highest hardness at which scratches could not be confirmed was set as scratch hardness of the film.

### [Breakdown Voltage]

A breakdown voltage was measured based on JIS-C-3216-5:2011 (a magnet wire test method-Part 5:electrical characteristics) using a dielectric breakdown tester (manufactured by YAMAGISHI Co., Ltd.).

### [Partial Discharge Inception Voltage]

Two sheets of manufactured electrodes were overlapped and measured using B010 manufactured by Fujikura Dia Cable Co., Ltd. An evaluation method was performed based on EN50178, which is an EN standard for circuits.

**Table 1**

| | Material of flat conductive plate | Electrodeposition dispersion | | | Evaluation of insulating film | | | | |
|---|---|---|---|---|---|---|---|---|---|
| | | Fluorine-based resin particles | | PAI particles/fluorine-based resin particles (mass ratio) | Film thickness (µm) | Relative permittivity | Hardness | Breakdown voltage (KV) | Partial discharge inception voltage (V/µm) |
| | | Type | Median diameter (nm) | | | | | | |
| Invention Example 1 | Copper | PTFE | 200 | 5/95 | 5 | 2.2 | B | 0.5 | 230 |
| Invention Example 2 | Copper | PTFE | 200 | 5/95 | 10 | 2.2 | B | 2 | 300 |
| Invention Example 3 | Copper | PTFE | 200 | 5/95 | 50 | 2.2 | B | 4 | 700 |
| Invention Example 4 | Copper | PTFE | 200 | 5/95 | 70 | 2.2 | B | 6 | 750 |
| Invention Example 5 | Copper | PTFE | 200 | 5/95 | 100 | 2.2 | B | 7 | 900 |
| Invention Example 6 | Copper | PTFE | 250 | 5/95 | 100 | 2.2 | 2B | 7 | 900 |
| Invention Example 7 | Copper | PTFE | 200 | 10/90 | 5 | 2.4 | H | 1 | 200 |
| Invention Example 8 | Copper | PTFE | 200 | 10/90 | 10 | 2.4 | H | 2 | 300 |
| Invention Example 9 | Copper | PTFE | 200 | 10/90 | 50 | 2.4 | H | 5 | 550 |
| Invention Example 10 | Copper | PTFE | 200 | 10/90 | 70 | 2.4 | H | 7 | 700 |
| Invention Example 11 | Copper | PTFE | 200 | 10/90 | 100 | 2.4 | B | 9 | 800 |
| Invention Example 12 | Copper | PTFE | 250 | 10/90 | 100 | 2.4 | 2B | 9 | 900 |
| Invention Example 13 | Copper | PTFE | 200 | 25/75 | 5 | 2.8 | 4H | 2 | 200 |
| Invention Example 14 | Copper | PTFE | 200 | 25/75 | 10 | 2.8 | 3H | 3 | 250 |
| Invention Example 15 | Copper | PTFE | 200 | 25/75 | 50 | 2.8 | 2H | 6 | 600 |
| Invention Example 16 | Copper | PTFE | 200 | 25/75 | 70 | 2.8 | 2H | 8 | 700 |

**Table 2**

| | Material of flat conductive plate | Electrodeposition dispersion | | | Evaluation of insulating film | | | | |
|---|---|---|---|---|---|---|---|---|---|
| | | Fluorine-based resin particles | | PAI particles/fluori ne-based resin particles (mass ratio) | Film thickness (µm) | Relative permittivity | Hardness | Breakdown voltage (_{K}V) | Partial discharge inception voltage (V/µm) |
| | | Type | Median diameter (nm) | | | | | | |
| Invention Example 17 | Copper | PTFE | 200 | 25/75 | 100 | 2.8 | H | 10 | 800 |
| Invention Example 18 | Copper | PTFE | 250 | 25/75 | 100 | 2.8 | 2B | 9 | 800 |
| Invention Example 19 | Copper | PTFE | 200 | 28/72 | 5 | 2.8 | 4H | 2 | 200 |
| Invention Example 20 | Copper | PTFE | 200 | 28/72 | 10 | 2.8 | 3H | 3 | 300 |
| Invention Example 21 | Copper | PTFE | 200 | 28/72 | 50 | 2.8 | 2H | 6 | 600 |
| Invention Example 22 | Copper | PTFE | 200 | 28/72 | 70 | 2.8 | 2H | 8 | 700 |
| Invention Example 23 | Copper | PTFE | 200 | 28/72 | 100 | 2.8 | H | 10 | 800 |
| Invention Example 24 | Copper | PTFE | 250 | 28/72 | 100 | 2.8 | 2B | 9 | 800 |
| Invention Example 25 | Copper | PTFE | 200 | 25/75 | 10 | 2.8 | H | 1 | 300 |
| Invention Example 26 | Copper | PTFE | 200 | 25/75 | 70 | 2.8 | H | 5 | 700 |
| Invention Example 27 | Copper | PTFE | 300 | 25/75 | 10 | 2.8 | H | 2 | 250 |
| Invention Example 28 | Copper | PTFE | 300 | 25/75 | 70 | 2.8 | H | 5 | 700 |
| Invention Example 29 | Copper | PTFE | 300 | 25/75 | 10 | 2.8 | H | 1 | 250 |
| Invention Example 30 | Copper | PTFE | 300 | 25/75 | 70 | 2.8 | H | 4 | 700 |
| Invention Example 31 | Copper | PFA | 200 | 25/75 | 10 | 2.8 | H | 2 | 250 |

**Table 3**

| | Material of flat conductive plate | Electrodeposition dispersion | | | Evaluation of insulating film | | | | |
|---|---|---|---|---|---|---|---|---|---|
| | | Fluorine-based resin particles | | PAI particles/flu orine-based resin particles (mass ratio) | Film thickness (µm) | Relative permittivity | Hardness | Breakdown voltage (kV) | Parti al discharge inception voltage (V/µm) |
| | | Type | Median diameter (nm) | | | | | | |
| Invention Example 32 | Copper | PFA | 200 | 25/75 | 70 | 2.8 | H | 5 | 700 |
| Invention Example 33 | Copper | FEP | 200 | 25/75 | 10 | 2.8 | H | 2 | 200 |
| Invention Example 34 | Copper | FEP | 200 | 25/75 | 70 | 2.8 | H | 5 | 700 |
| Invention Example 35 | Aluminum | PTFE | 200 | 25/75 | 5 | 2.8 | 2H | 1 | 200 |
| Invention Example 36 | Aluminum | PTFE | 200 | 25/75 | 10 | 2.8 | 2H | 2 | 300 |
| Invention Example 37 | Aluminum | PTFE | 200 | 25/75 | 50 | 2.8 | 2H | 4 | 600 |
| Invention Example 38 | Aluminum | PTFE | 200 | 25/75 | 70 | 2.8 | 2H | 6 | 700 |
| Invention Example 39 | Aluminum | PTFE | 200 | 25/75 | 100 | 2.8 | H | 7 | 800 |
| Comparative Example 1 | Copper | PTFE | 200 | 30/70 | 50 | 2.9 | 2H | 5 | 600 |
| Comparative Example 2 | Copper | PTFE | 200 | 25/75 | 2 | 2.8 | 2H | 0.2 | 150 |
| Comparative Example 3 | Copper | PTFE | 200 | 25/75 | 150 | 2.8 | 3B | 12 | 1000 |
| Comparative Example 4 | Copper | PTFE | 100 | 30/70 | 50 | 2.9 | 3B | 4 | 600 |
| Comparative Example 5 | Copper | PTFE | 400 | 30/70 | 50 | 2.9 | 3B | 4 | 600 |
| Comparative Example 6 | Aluminum | PTFE | 200 | 30/70 | 2 | 2.9 | 2H | 4 | 100 |
| Comparative Example 7 | Copper | PTFE | 100 | 3/97 | insulating film could not be formed. | | | | |

From results of Tables 1 to 3, in all of the flat conductive plate provided with insulating films obtained in Invention Examples 1 to 39, the hardness (the pencil hardness) was 2B or more which was high, the relative permittivity was 2.8 or less which was low, and the partial discharge inception voltage was 200 V or more. This means that a decrease in the film thickness due to the discharge is less likely occur, and the insulating properties can be expected for a long period of time. In contrast, in the flat conductive plates provided with insulating films obtained in Comparative Examples 1 and 4 to 6, the amount of the fluorine-based resin was 70% by mass which was less than the range of the present embodiment, and the relative permittivity was 2.9 which was high. Meanwhile, in Comparative Example 7, the amount of the fluorine-based resin was 97% by mass, which was more than the range of the present embodiment, and an insulating film could not be obtained. In addition, in the flat conductive plate provided with an insulating film obtained in Comparative Example 2, the average film thickness was 2 µm, which was thinner than the range of the present embodiment, and the partial discharge inception voltage was 150 V which was low. Meanwhile, in the flat conductive plate provided with an insulating film obtained in Comparative Example 3, the average film thickness was 150 µm, which was thicker than the range of the present embodiment, and the hardness was 3B which was low.

### Industrial Applicability

The flat conductive plate of the present embodiment is suitably applied as a motor component such as a coil or an inductor.

### Explanation of Reference Signs

- 1:: Flat conductive plate provided with insulating film
- 10:: Flat conductive plate
- 11:: Opening part
- 12:: Release part
- 20:: Insulating film

## Claims

1. A flat conductive plate provided with an insulating film comprising:
a flat conductive plate which is a punched product; and
an insulating film which coats at least a part of the flat conductive plate,
wherein the insulating film is an electrodeposited film,
the insulating film includes a polyamide-imide resin and a fluorine-based resin,
an amount of the fluorine-based resin with respect to a total amount of the polyamide-imide resin and the fluorine-based resin is in a range of 72% by mass or more and 95% by mass or less,
a relative permittivity at 25°C is in a range of 2.2 or more and 2.8 or less, and
an average film thickness is in a range of 5 µm or more and 100 µm or less.

2. The flat conductive plate provided with an insulating film according to Claim 1,
wherein hardness of the insulating film is in a range of 2B or more and 4H or less in terms of pencil hardness.

3. The flat conductive plate provided with an insulating film according to Claim 1 or 2,
wherein an element of a main component of the flat conductive plate is copper or aluminum.

4. The flat conductive plate provided with an insulating film according to any one of Claims 1 to 3,
wherein the flat conductive plate is an annular body having an opening part in the center in a plan view, and having one release part connecting the opening part and an outer peripheral part.

5. A method for manufacturing a flat conductive plate provided with an insulating film, the method comprising:
an electrodeposition step of electrodepositing an electrodeposition dispersion on a surface of a flat conductor which is a punched product to obtain a flat conductor provided with an electrodeposited layer, wherein the electrodeposition dispersion contains polyamide-imide resin particles and fluorine-based resin particles, and an amount of the fluorine-based resin particles with respect to a total amount of the polyamide-imide resin particles and the fluorine-based resin particles is in a range of 72% by mass or more and 95% by mass or less; and
a baking step of heating the flat conductor provided with an electrodeposited layer at a temperature of 260°C or higher and 350°C or lower to bake the electrodeposited layer on the flat conductor.
